# EUROPÄISCHE PATENTSCHRIFT

(11) **EP 3 641 104 B1**
(45) Veröffentlichungstag und Bekanntmachung des Hinweises auf die Patenterteilung: **07.09.2022**
(21) Anmeldenummer: 19201045.2
(22) Anmeldetag: 02.10.2019
(51) Int. Cl.: H02K 3/52, H02K 3/34, H02K 15/00, H02K 15/095, H02K 3/28

(54) **GLEICHSTROMMOTOR UND VERFAHREN ZUR HERSTELLUNG EINES GLEICHSTROMMOTORS**
DIRECT CURRENT MOTOR AND METHOD FOR PRODUCING A DIRECT CURRENT MOTOR
MOTEUR À COURANT CONTINU ET PROCÉDÉ DE FABRICATION D'UN MOTEUR À COURANT CONTINU

(30) Priorität: 18.10.2018 DE 102018217852
(43) Veröffentlichungstag der Anmeldung: 22.04.2020
(73) Patentinhaber: Bühler Motor GmbH, 90459 Nürnberg (DE)
(72) Erfinder: Brettschneider, Jürgen, 90482 Nürnberg (DE); Antes, Michael, 91358 Kunreuth (DE); Reinecker, Bernd, 90491 Nürnberg (DE)

(56) Entgegenhaltungen:
- EP-A1- 2 624 415
- DE-A1-102013 111 868
- DE-A1-102015 208 210
- DE-A1-102015 211 786
- US-A1- 2015 137 637

## Beschreibung

Die Erfindung betrifft ein Verfahren zur Herstellung eines Gleichstrommotors (1), mit einem permanentmagnetischen, um eine Motorlängsachse (19) drehbar gelagerten Innenrotor (2) und einem bewickelten Statorkern (3) mit ausgeprägten nach innen gerichteten Polen (4), welche in Umfangsrichtung mit einem Rückschlussring (5) einstückig und durch Statornuten (6) voneinander getrennt sind, einem Isolierstoffkörper (7), welcher die Statornuten (6) auskleidet und eine mit achsparallelen Vorsprüngen (9) ausgebildete Rückschlussringabdeckung (8) aufweist, welche eine axiale Stirnseite des Rückschlussrings (5) abdeckt, wobei ein Wicklungsdraht (10) um jeweils einen Pol (4) gewickelt und um zwei Vorsprünge (9) radial außen herum zum räumlich benachbarten Pol geführt ist, wobei jedem Pol ein Vorsprung (9) zugeordnet ist.

Außenstatoren mit ausgeprägten Polen können ein oder mehrteilig sein. Bei mehrteiligen Statoren lassen sich die Pole einzeln von außen z. B. durch einen Flyer bewickeln. Der mehrfach unterbrochene magnetische Kreis verringert jedoch den Wirkungsgrad deutlich, deshalb werden Statoren in Verlaufsrichtung der Magnetfeldlinien vielfach einteilig ausgeführt. Einteilige Statoren können aus einem Blechstapel oder aus gepressten Metallpulver bestehen; sie werden in der Regel durch einen Nadelwickler bewickelt. Hierfür ist eine hohle Wickelnadel erforderlich, in welcher der Wicklungsdraht hindurchgeführt wird. Die Wickelnadel hat je nach Drahtdurchmesser einen Mindestdurchmesser. Für eine prozesssichere Fertigung ist zudem ein Mindestabstand zwischen der Wickelnadel und Statorbauteilen einzuhalten. Aus diesem Grund lassen sich herstellungsbedingt nicht alle Geometrien, die physikalisch möglich oder montagetechnisch wünschenswert wären realisieren.

Aus der DE 10 2015 211 786 A1 ist ein bürstenloser Motor mit einem Permanentmagnetrotor und einem bewickelten Stator bekannt, bestehend aus einem Statorjoch mit einer Mehrzahl von Statorpolen, einem stirnseitig angeordneten Isolierelement, einer eine Mehrzahl von Spulen umfassende Statorwicklung, wobei jeder Statorpol mit einer Spule bewickelt ist, einer Verschaltungsanordnung zum Verschalten der Spulen miteinander und mit elektrischen Anschlüssen.

Die EP 2 624 415 A1 ist ein Motor bekannt mit einem Stator, umfassend Statorzähne, einer Spulenanordnung mit einer Spule, die durch einen Spulendraht um die Statorzähne herum geformt ist. Mittels einer Kontaktierungsplatte wird die Spulenanordnung kontaktiert, wobei die Spulenanordnungen untereinander mittels einer Verbindungsbrücke verschaltet sind.

Weiterhin offenbart die US 2015/0137637 A1 einen Stator eines Motors mit einer Stromschienenverschaltung, wobei ein Statorkern mit einer Mehrzahl von Statorzähnen vorgesehen ist, die von einem Isolator isoliert sind. Die Statorzähne umfassen eine Wicklung.

Die DE 10 2013 111 868 A1 beschreibt ferner einen Stator für einen Elektromotor mit einem Statorkern mit einer Mehrzahl von Statorpolen und eine aus Wicklungsdraht gebildete Wicklungsanordnung mit einer Mehrzahl von Wicklungen, die jeweils einem Statorpol zugeordnet sind.

Aufgabe der Erfindung ist es daher bei einem gattungsgemäßen Gleichstrommotor für eine prozesssichere Herstellung, eine einfache Montage und einen guten Wirkungsgrad zu sorgen.

Diese Aufgabe wird erfindungsgemäß durch die Merkmale des Verfahrens gemäß Anspruch 1 gelöst, insbesondere durch folgende Verfahrensschritte: a) Bereitstellung eines mit einem Isolierstoffkörper (7) versehenen Statorkerns (3) und einer Nadelwickelmaschine; b) Einlegen des Statorkerns in die Nadelwickelmaschine; c) Anschlagen eines Wicklungsdrahtes an einem festen Anschlagpunkt am Stator oder an einem Werkzeugträger; d) Führen des Wicklungsdrahtes (10) vom Anschlagpunkt zwischen zwei Vorsprüngen (9) des Isolierstoffkörper (7) radial nach Innen; e) Wickeln einer Spule um einen Pol (4); f) Führen des Wicklungsdrahtes (10) radial nach außen zwischen zwei Vorsprüngen; g) Herumführen des Wicklungsdrahtes (10) um ein werkzeugfestes Umlenkmittel radial außerhalb des Rückschlussringes; h) Wiederholung der Schritte d bis g, bis der Stator bewickelt ist und Anschlagen des Wicklungsdrahtes an einem festen Anschlagpunkt am Stator oder an einem Werkzeugträger; i) Zurückziehen der werkzeugfesten Umlenkmittel; j) radiales Verformen der radial außen verlaufenden Wicklungsdrahtabschnitte nach innen, bis in einen Bereich innerhalb des Rückschlussringes; k) Auflegen von Kontaktabschnitten einer Kontakteinheit auf die freiliegenden Wicklungsdrahtabschnitte; l) Verschweißen der Kontaktabschnitte mit den Wicklungsdrahtabschnitten.

Weiterbildungen der Erfindung werden in den Unteransprüchen näher dargestellt.

Da der Wicklungsdraht (10) eines Gleichstrommotors gemäß des Verfahrens zwischen zwei benachbarten Polen (4) radial innerhalb eines von den Außenkonturen der Vorsprünge (9) definierten Kreises (11) verläuft und dort kontaktiert ist, lässt sich eine Anschlussbaugruppe einfach und ohne die Gefahr von Kurzschlüssen montieren. Kurzschlüsse könnten beispielhaft zwischen der Anschlussbaugruppe und einem Motorgehäuse entstehen, welches in der Regel auf Massepotential liegt. Bei herkömmlichen nadelbewickelten Statoren ist nicht genügend Bauraum vorhanden, um einen Wicklungsdraht nach radial innen, dann mit ausreichendem Abstand zweimal um einen rechten Winkel und anschließend wieder radial nach außen zu führen. Daher ist die Kontakteinheit häufig axial weit vorgelagert oder radial aufbauend angeordnet.

Im speziellen ist vorgesehen, dass der Wicklungsdraht (10) zwischen zwei benachbarten Polen (4) und zwischen zwei benachbarten Vorsprüngen (9) radial um zumindest einen Drahtdurchmesser radial weiter innen verläuft als die um die Vorsprünge (9) außen herum geführten Drahtabschnitte (Drahtzuführungsabschnitt 81 und Drahtabführungsabschnitt 82).

Um ausreichend Platz für die weitere Montage bereitzustellen ist vorgesehen, dass der radial nach innen geführte Wicklungsdraht (10) an einander zugewandten Seitenflächen (12) zweiter benachbarter Vorsprünge (9) anliegt oder nur einen Abstand von maximal einem Wicklungsdrahtdurchmesser aufweist. Hierbei verbleibt ein ausreichender Abstand zwischen den radial verlaufenden Drahtabschnitten, um einen tangential verlaufenden Drahtabschnitt frei verlaufend anzuordnen.

Eine Weiterbildung der Erfindung besteht darin, dass die Rückschlussringabdeckung (8) zwischen den Vorsprüngen (9) in Axialrichtung offene Freisparungen (21) aufweist. Diese Freisparungen dienen der prozesssicheren Verbindung des Wicklungsdrahts (10) mit einer Kontakteinheit.

Zweckmäßigerweise sind zwischen den Vorsprüngen (9) und den Freisparungen (21) axiale Auflageflächen (22) für den Wicklungsdraht (10) ausgebildet. Diese dienen der optimalen Verlegung des Wicklungsdrahts (10).

Die Prozesssicherheit und das Kurzschlussrisiko wird weiter dadurch optimiert, dass in den Auflageflächen (22) Axialrillen (24) und/oder in den Vorsprüngen (9) Radialrillen (25) zur Aufnahme von Drahtabschnitten vorhanden sind. Der Wicklungsdraht kann hierdurch geordnet und ohne Berührungen zweier aneinander vorbeigeführter Drahtabschnitten verlegt werden.

Die Verlegung des Wicklungsdrahtes (10) wird weiter verbessert, indem jeweils ein Drahtzuführungsabschnitt (81) desselben Wicklungsdrahtes (10) auf jeweils einer ersten Auflagefläche (22) aufliegt und ein folgender Drahtabführungsabschnitt (82) auf einer zweiten Auflagefläche (23) aufliegt.

Weiter ist vorgesehen, dass ein Kontaktabschnitt des Wicklungsdrahts (10) zwischen zwei benachbarten Polen (4) mit dem Kontaktvorsprung (13) einer Sammelschiene (14) elektrisch verbunden ist. Dieser Kontaktvorsprung (13) ist so ausgelegt, dass er zwischen die radial verlaufenden Wicklungsdrahtabschnitte hindurch passt. Der Kontaktvorsprung (13) muss aus Gründen der Kontaktsicherheit eine Mindestbreite aufweisen und darf die radial verlaufenden Wicklungsdrahtabschnitte nicht verletzen oder schwächen. Die Sammelschiene verbindet die Spulen (39) einer Phase miteinander, um sie an einer gemeinsamen Anschlussfahne (32) elektrisch anzuschließen.

Als zweckmäßig haben sich hakenartige Kontaktvorsprünge (13) erwiesen, da diese sich leicht fügen und elektrisch mit freiliegenden Wicklungsdrahtabschnitten verbinden lassen.

Sinnvollerweise ist vorgesehen, dass die Kontaktvorsprünge (13) jeweils teilweise im Bereich einer Freisparung (21) angeordnet sind.

Die elektrische Verbindung wird durch eine Schweißverbindung hergestellt. Diese bietet sowohl eine gute elektrische als auch eine stabile mechanische Verbindung zwischen den Kontakthaken (17) und dem Kontaktabschnitt (20) des Wicklungsdrahts (10).

Gemäß einem weiteren Merkmal der Erfindung weist der Isolierstoffkörper (7) keine Drahtumlenkmittel auf, an denen der Wicklungsdraht (10) radial innen herumgeführt ist. Um derartige Drahtumlenkmittel müsste der Wicklungsdraht beim Wickelvorgang zeitaufwändig nacheinander herumgeführt werden. Vorteilhafter wäre es die Kontaktabschnitte (20) in einem einzigen Vorgang radial nach innen zu verlegen. Ausführungsbeispiele der Erfindung werden nachfolgend anhand der Zeichnung näher erläutert. Es Zeigen:
Fig. 1 einen Isolierstoffkörper,
Fig. 2 einen Statorkern,
Fig. 3 einen auf den Statorkern montierter Isolierstoffkörper,
Fig. 4 einen mit einer Wicklung versehenen Stator,
Fig. 5 eine Draufsicht auf Fig. 4,
Fig. 6 eine Ergänzung von Fig. 5 mit Drahtverlegehilfen,
Fig. 7 eine räumliche Darstellung von Fig. 6,
Fig. 8 eine Schnittansicht eines Gleichstrommotors,
Fig. 9 eine Darstellung eines Biegevorgangs,
Fig. 10 eine räumliche Darstellung des Biegevorgangs,
Fig. 11 eine räumliche Darstellung des Drahtverlaufs nach dem Biegevorgang und
Fig. 12 ein montierter Stator mit Anschlusseinheit.

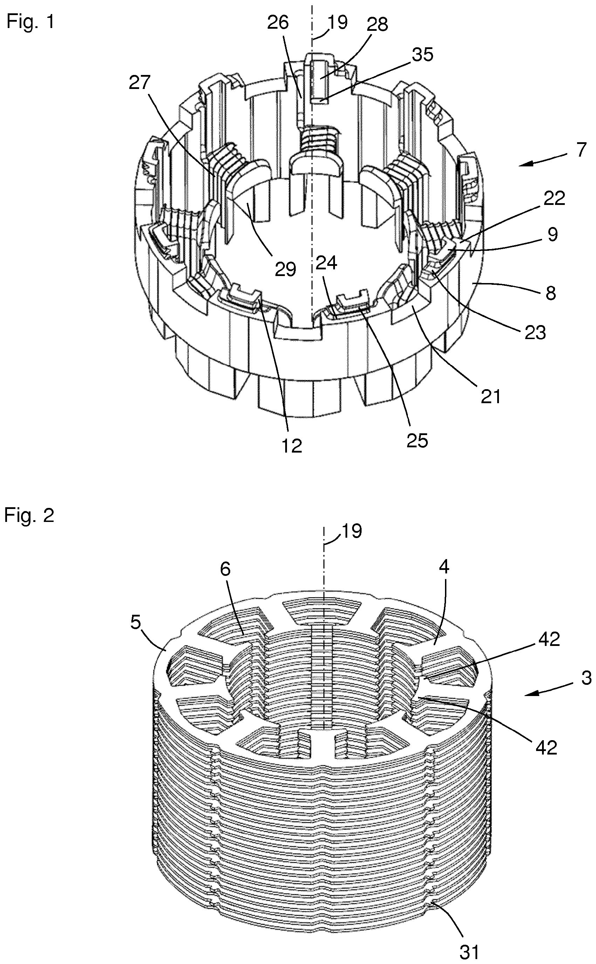

Fig. 1 zeigt einen Isolierstoffkörper 7 für einen neunpoligen Stator, mit dünnwandigen Nutauskleidungen 29, einer Rückschlussringabdeckung 8, welche in ihrer Grundform hohlzylindrisch ausgebildet ist und auf seiner axialen zu den Nutauskleidungen 29 abseitigen Fläche Freisparungen 21, und Vorsprünge 9 aufweist. Zwischen den Freisparungen 21 und den Vorsprüngen 9 sind erste Auflageflächen 22 und zweite Auflageflächen 23 stufenartig angeformt. Die ersten Auflageflächen 22 weisen Axialrillen 24, die zweiten Auflageflächen 23 Radialrillen 25 auf. Diese dienen zur definierten Verlegung eines Wicklungsdrahtes, wobei möglichst eine Berührung der von einzelnen Drahtabschnitten vermieden werden soll. Eine Seitenfläche 12 der Vorsprünge weist keine Rillenstruktur auf. Auch die Nutauskleidungen 29 weisen Rillen 27 auf, die zur geordneten Verlegung des Wicklungsdrahtes sorgen. Zwischen den Nutauskleidungen 29 und den Vorsprüngen 9 verlaufen Drahtführungsrillen 26 achsparallel zu einer Motorlängsachse 19. Auf der radial inneren Seite der Vorsprünge 9 sind Führungsnuten 28 eingeformt, welche zur Aufnahme und Führung einer Kontakteinheit dienen. Die Führungsnuten 28 weisen hierzu auch axiale Anschlagflächen 35 auf, die auch für einen lagerichtigen Einbau hilfreich sind.

Fig. 2 zeigt einen Statorkern 3, bestehend aus einem Blechstapel von gegeneinander isolierten magnetisch leitenden Blechen. Der Statorkern umfasst im gezeigten Beispiel neun nach innen zur Motorlängsachse 19 gerichtete ausgeprägte Pole 4, an dessen inneren Ende Polschuhe 42 vorhanden sind, welche die Polfläche verbreitern. Die Polbreite ist begrenzt durch die Breite einer Wickelnadel und deren erforderliche Bewegungsfreiheit während einer Bewicklung des Stators. Die Pole 4 begrenzen Statornuten 6, die als Wicklungsaufnahmeraum dienen. Die Pole 4 sind innerhalb eines Blechs einstückig mit einem Rückschlussring 5. An der radialen Außenseite des Rückschlussrings 5 sind teilweise Klemmzungen 31 mitgestanzt, die zur Fixierung in einem Motorgehäuse dienen.

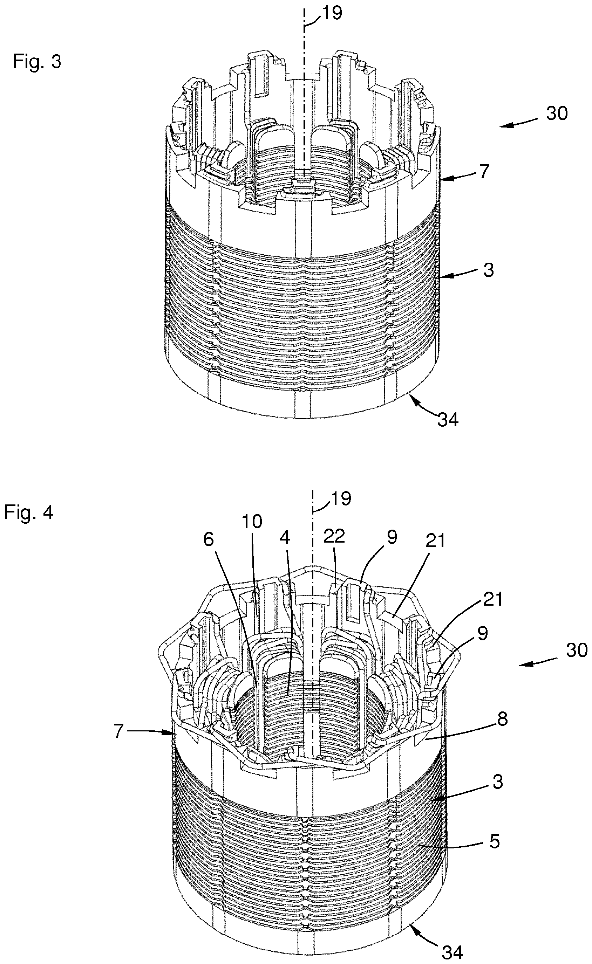

Fig. 3 zeigt einen Stator 30, bestehend aus einem Statorkern 3, einem axial montierten Isolierstoffkörper 7 und einer auf der axial gegenüberliegenden Seite montierten Isolierkappe 34, welche ebenfalls zur Nutauskleidung und Rückschlussringabdeckung dient. Weiter ist die Motorlängsachse 19 dargestellt.

Fig. 4 zeigt einen Stator 30 gemäß Fig. 3 mit zusätzlicher Bewicklung durch einen Wicklungsdraht 10. Im Einzelnen sind dargestellt die Isolationskappe 34, der Statorkern 3, mit dem Rückschlussring 5 und den Polen 4, der Isolierstoffkörper 7, mit der Rückschlussringabdeckung 8, den ersten Auflageflächen 22, den Freisparungen 21 und den Vorsprüngen 9. Der Wicklungsdraht 10 ist jeweils über einen Pol 4 gewickelt, wird anschließend radial aus einer ersten Statornut 6 nach außen verlegt, um zwei benachbarte Vorsprünge 9 geführt und dann radial nach innen zu einem benachbarten Pol in einer benachbarten Statornut verlegt. Auf gleiche Weise werden die übrigen Pole bewickelt. Weiter ist die Motorlängsachse 19 dargestellt.

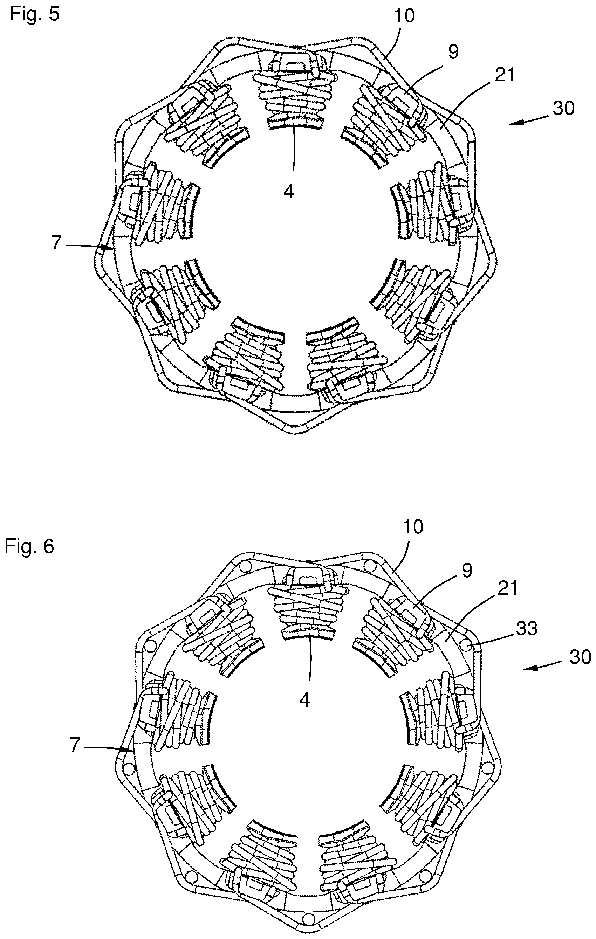

Fig. 5 zeigt eine Draufsicht auf Fig. 4, mit dem Stator 30, mit dem Isolierstoffkörper 7, den Polen 4, dem Wicklungsdraht 10, den Freisparungen 21 und den Vorsprüngen 9.

Fig. 6 zeigt eine Ergänzung zu Fig. 5 mit dem Stator 30, Drahtverlegehilfen 33, welche aus werkzeugfesten Umlenkstiften bestehen, die nach dem Bewickeln abgezogen werden. Weiter sind zu erkennen der Isolierstoffkörper 7, die Pole 4, der Wicklungsdraht 10, die Freisparungen 21 und die Vorsprünge 9.

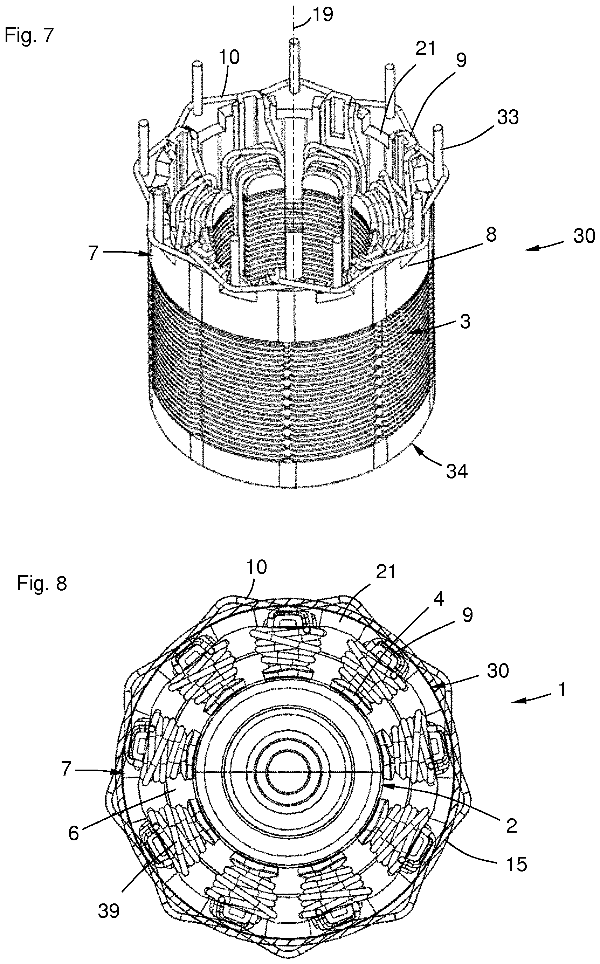

Fig. 7 zeigt eine räumliche Darstellung von Fig. 6, mit dem Stator 30, den Drahtverlegehilfen 33, der Isolationskappe 34, dem Statorkern 3, dem Isolierstoffkörper 7, dem Wicklungsdraht 10, den Freisparungen 21, der Rückschlussringabdeckung 8, der Motorlängsachse 19 und den Vorsprüngen 9.

Fig. 8 zeigt eine Schnittansicht eines Gleichstrommotors 1 mit einem Motorgehäuse 15 und einem Innenrotor 2. Weiter ist der Stator 30, mit dem Isolierstoffkörper 7, dem Wicklungsdraht 10, den Freisparungen 21, Spulen 39 und Vorsprünge 9 zu erkennen. Die radial nach außen ragenden Teile des Wicklungsdrahts 10 sind nur zur Veranschaulichung der geometrischen Verhältnisse dargestellt.

Die Figuren 4 bis 8 zeigen einen Zwischenzustand des Stators 30 während der Herstellung.

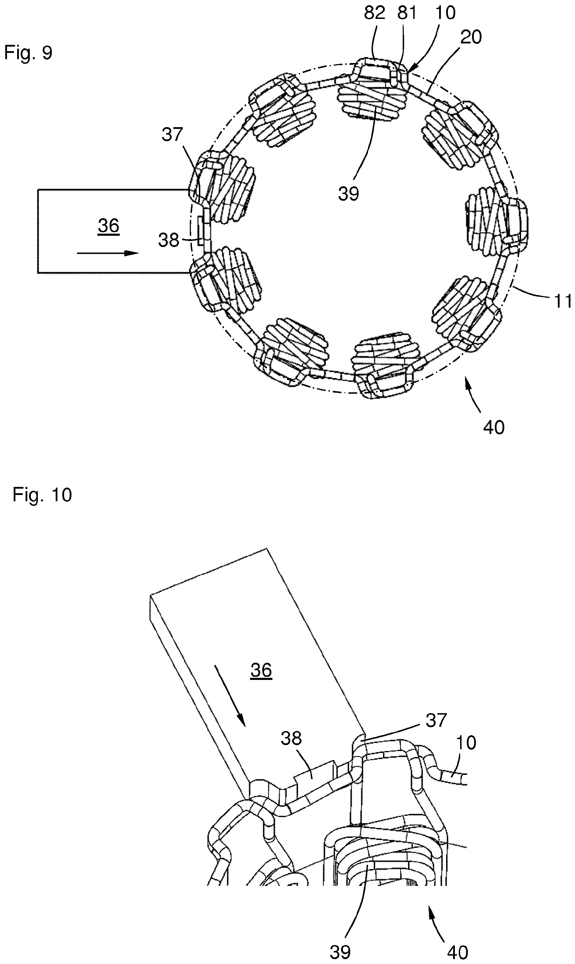

Fig. 9 und 10 zeigen Darstellungen eines Biegevorgangs und der räumlichen Gestalt der aus einer Vielzahl von Spulen 39 bestehenden Statorwicklung 40. Mehrere Biegestempel 36, wovon nur einer dargestellt ist, mit zwei Drahtformungskonturen 37 und einer Ausnehmung 38 werden radial nach innen bewegt (siehe Pfeil) und verformen dabei den Wicklungsdraht 10 im Bereich der radial nach außen geführten Abschnitte derart, dass er zwischen zwei benachbarten Polen (nicht gezeigt) und zwischen zwei benachbarten Vorsprüngen (nicht gezeigt) radial innerhalb eines von den Außenkonturen der Vorsprünge definierten Kreises 11 verläuft. Dieser Bereich des Wicklungsdrahts dient als Kontaktabschnitt 20. An Jeden Kontaktabschnitt 20 schließt ein Drahtzuführungsabschnitt 81 und ein Drahtabführungsabschnitt 82 an. Der Drahtzuführungsabschnitt 81 verläuft axial näher am Statorkern 3 als der Drahtabführungsabschnitt 82. Der Drahtzuführungsabschnitt 81 und der Drahtabführungsabschnitt 82 sind über einen Vorsprung 9 außen herumgeführt.

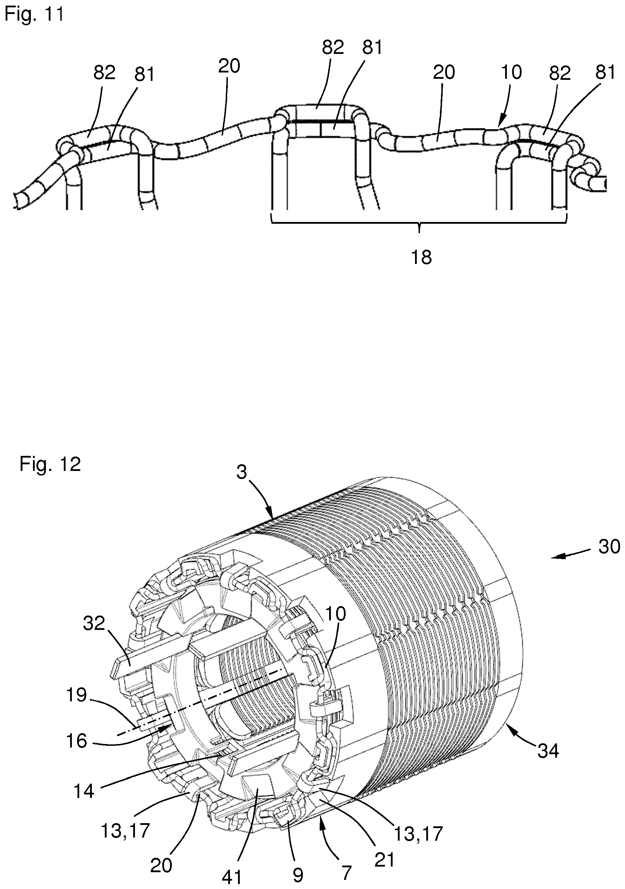

Fig. 11 zeigt eine räumliche Darstellung des Drahtverlaufs der Wicklungsdrahts 10 nach dem Biegevorgang. Zwischen zwei benachbarten Polen verläuft der Wicklungsdraht 10 so, dass er aus ausgehend von einer um einen ersten Pol gewickelte Spule (siehe Fig. 9) aus einer Statornut zunächst axial und dann radial nach außen, anschließend tangential, radial nach innen, wieder tangential, radial nach außen, tangential und wieder radial nach innen und zum benachbarten Pol geführt ist, wo er eine zweite Spule (siehe Fig. 9) bildet. Der Bereich zwischen einem Drahtabführungsabschnitt 82 und einem Drahtzuführungsabschnitt 81 bildet eine Drahtverbindung 18 zwischen den Spulen räumlich benachbarter Pole. Zwischen dem Drahtabführungsabschnitt 82 und dem Drahtzuführungsabschnitt 81 befindet sich der Kontaktabschnitt 20.

Fig. 12 zeigt schließlich einen montierten Stator 30, mit der Isolationskappe 34, dem Statorkern 3, dem Isolierstoffkörper 7 und einer Kontakteinheit 16. Die Kontakteinheit 16 besteht aus Sammelschienen mit Kontaktvorsprüngen 13, die hakenartig ausgebildet sind (Kontakthaken 17). Aufgrund der Ausrichtung der Kontaktvorsprünge 13 lässt sich die Kontakteinheit 16 axial auf den Stator 30 montieren. Die Kontaktvorsprünge 13 sind den Freisparungen 21 räumlich zugeordnet. Die Freisparungen sind so dimensioniert, dass eine Schweißzange auf einfache Weise beide Seiten der Kontaktvorsprünge 13 erreicht. Vertiefungen 41 an der Kontakteinheit 16 dienen dem gleichen Zweck. Jede Sammelschiene weist zusätzlich Anschlussfahnen 32 auf über welche die Wicklung mit Spannung versorgt wird.

### Bezugszeichenliste

- 1: Gleichstrommotor
- 2: Innenrotor
- 3: Statorkern
- 4: Pol
- 5: Rückschlussring
- 6: Statornut
- 7: Isolierstoffkörper
- 8: Rückschlussringabdeckung
- 9: Vorsprung
- 10: Wicklungsdraht
- 11: Kreis
- 12: Seitenfläche
- 13: Kontaktvorsprung
- 14: Sammelschiene
- 15: Motorgehäuse
- 16: Kontakteinheit
- 17: Kontakthaken
- 18: Drahtverbindung
- 19: Motorlängsachse
- 20: Kontaktabschnitt
- 21: Freisparung
- 22: erste Auflagefläche
- 23: zweite Auflagefläche
- 24: Axialrille
- 25: Radialrille
- 26: Drahtführungsrille
- 27: Rille
- 28: Führungsnut
- 29: Nutauskleidung
- 30: Stator
- 31: Klemmzunge
- 32: Anschlussfahne
- 33: Drahtverlegehilfe
- 34: Isolationskappe
- 35: axiale Anschlagfläche
- 36: Biegestempel
- 37: Drahtformungskontur
- 38: Ausnehmung
- 39: Spule
- 40: Statorwicklung
- 41: Vertiefung
- 42: Polschuh
- 81: Drahtzuführungsabschnitt
- 82: Drahtabführungsabschnitt

## Patentansprüche

1. Verfahren zur Herstellung eines Gleichstrommotors (1), mit einem permanentmagnetischen, um eine Motorlängsachse (19) drehbar gelagerten Innenrotor (2) und einem bewickelten Statorkern (3) mit ausgeprägten nach innen gerichteten Polen (4), welche in Umfangsrichtung mit einem Rückschlussring (5) einstückig und durch Statornuten (6) voneinander getrennt sind, einem Isolierstoffkörper (7), welcher die Statornuten (6) auskleidet und eine mit achsparallelen Vorsprüngen (9) ausgebildete Rückschlussringabdeckung (8) aufweist, welche eine axiale Stirnseite des Rückschlussrings (5) abdeckt, wobei ein Wicklungsdraht (10) um jeweils einen Pol (4) gewickelt und um zwei Vorsprünge (9) radial außen herum zum räumlich benachbarten Pol geführt ist, wobei jedem Pol ein Vorsprung (9) zugeordnet ist, **gekennzeichnet durch** folgende Verfahrensschritte: a) Bereitstellung eines mit einem Isolierstoffkörper (7) versehenen Statorkerns (3) und einer Nadelwickelmaschine; b) Einlegen des Statorkerns in die Nadelwickelmaschine; c) Anschlagen eines Wicklungsdrahtes an einem festen Anschlagpunkt am Stator oder an einem Werkzeugträger; d) Führen des Wicklungsdrahtes (10) vom Anschlagpunkt zwischen zwei Vorsprüngen (9) des Isolierstoffkörpers (7) radial nach Innen; e) Wickeln einer Spule um einen Pol (4); f) Führen des Wicklungsdrahtes (10) radial nach außen zwischen zwei Vorsprüngen; g) Herumführen des Wicklungsdrahtes (10) um ein werkzeugfestes Umlenkmittel (33) radial außerhalb des Rückschlussrings derart, dass der Wicklungsdraht (40) um zwei Vorsprünge radial außen herum zum räumlich benachbarten Pol geführt ist; h) Wiederholung der Schritte d bis g, bis der Stator bewickelt ist und Anschlagen des Wicklungsdrahtes an einem festen Anschlagpunkt am Stator oder an einem Werkzeugträger; i) Zurückziehen der werkzeugfesten Umlenkmittel; j) radiales Verformen der radial außen verlaufenden Wicklungsdrahtabschnitte nach innen, bis in einen Bereich innerhalb des Rückschlussringes; k) Auflegen von Kontaktabschnitten einer Kontakteinheit (16) auf die freiliegenden Wicklungsdrahtabschnitte; l) Verschweißen der Kontaktabschnitte mit den Wicklungsdrahtabschnitten.

2. Verfahren nach Anspruch 1, **dadurch gekennzeichnet, dass** der Wicklungsdraht (10) zwischen zwei benachbarten Polen (4) und zwischen zwei benachbarten Vorsprüngen (9) radial innerhalb eines von den Außenkonturen der Vorsprünge (9) definierten Kreises (11) verläuft und dort kontaktiert ist.

3. Verfahren nach Anspruch 2, **dadurch gekennzeichnet, dass** der Wicklungsdraht (10) zwischen zwei benachbarten Polen (4) und zwischen zwei benachbarten Vorsprüngen (9) radial um zumindest einen Drahtdurchmesser radial weiter innen verläuft als um die Vorsprünge (9) geführte Drahtzuführungsabschnitte (81, 82).

4. Verfahren nach Anspruch 2 oder 3, **dadurch gekennzeichnet, dass** der radial nach innen geführte Wicklungsdraht (10) an einander zugewandten Seitenflächen (12) oder Radialrillen (25) zweier benachbarter Vorsprünge (9) anliegt oder nur einen Abstand von maximal einem Wicklungsdrahtdurchmesser zu der jeweiligen Seitenfläche (12) bzw. Radialrille (25) aufweist.

5. Verfahren nach Anspruch 2, 3 oder 4, **dadurch gekennzeichnet, dass** die Rückschlussringabdeckung (8) zwischen den Vorsprüngen (9) in Axialrichtung offene Freisparungen (21) aufweist.

6. Verfahren nach Anspruch 5, **dadurch gekennzeichnet, dass** zwischen den Vorsprüngen (9) und den Freisparungen (21) axiale Auflageflächen (22) für den Wicklungsdraht (10) ausgebildet sind.

7. Verfahren nach Anspruch 6, **dadurch gekennzeichnet, dass** in den Auflageflächen (22) Axialrillen (24) und/oder in den Vorsprüngen (9) Radialrillen (25) zur Aufnahme von Drahtabschnitten vorhanden sind.

8. Verfahren nach Anspruch 6 oder 7, **dadurch gekennzeichnet, dass** jeweils ein Drahtzuführungsabschnitt (81) desselben Wicklungsdrahtes (10) auf jeweils einer ersten Auflagefläche (22) aufliegt und ein folgender Drahtabführungsabschnitt (82) auf einer zweiten Auflagefläche (23) aufliegt.

9. Verfahren nach zumindest einem der vorangehenden Ansprüche, **dadurch gekennzeichnet, dass** die Kontakteinheit (16) zumindest eine Sammelschiene (14) aufweist und ein Kontaktabschnitt (20) des Wicklungsdrahts (10) zwischen zwei benachbarten Polen (4) mit einem Kontaktvorsprung (13) der Sammelschiene (14) elektrisch verbunden ist.

10. Verfahren nach Anspruch 9, **dadurch gekennzeichnet, dass** der Kontaktvorsprung (13) hakenartig ausgebildet ist.

11. Verfahren nach Anspruch 5 und Anspruch 9 oder 10, **dadurch gekennzeichnet, dass** der Kontaktvorsprung (13) teilweise im Bereich einer Freisparung (21) angeordnet ist.

12. Verfahren nach zumindest einem der vorangehenden Ansprüche, **dadurch gekennzeichnet, dass** der Isolierstoffkörper (7) keine Drahtumlenkmittel aufweist, an denen der Wicklungsdraht (10) radial innen herumgeführt ist.

## Claims

1. A method for producing a DC motor (1), having a permanent-magnetic inner rotor (2) mounted rotatably about a longitudinal motor axis (19), and a wound stator core (3) with pronounced inward-directed poles (4) which in the peripheral direction are in one piece with a return ring (5) and are separated from each other by stator slots (6), and having an insulating-material body (7) which lines the stator slots (6) and has a return ring cover (8) formed with paraxial projections (9) which covers an axial end face of the return ring (5), wherein a winding wire (10) is wound around one pole (4) in each case and is guided around two projections (9) radially on the outside to the spatially adjacent pole, with each pole being assigned a projection (9), **characterised by** the following method steps: a) providing a stator core (3) provided with an insulating-material body (7), and a needle winding machine; b) placing the stator core in the needle winding machine; c) attaching a winding wire to a fixed attachment point on the stator or on a tool carrier; d) guiding the winding wire (10) radially inwards from the attachment point between two projections (9) of the insulating-material body (7); e) winding a coil about a pole (4); f) guiding the winding wire (10) radially outwards between two projections; g) guiding the winding wire (10) around a tool-mounted deflection means (33) radially outside the return ring such that the winding wire (40) is guided around two projections radially externally to the spatially adjacent pole; h) repeating steps d to g until the stator has been wound, and attaching the winding wire to a fixed attachment point on the stator or on a tool carrier; i) withdrawing the tool-mounted deflection means; j) radially deforming the winding-wire portions running radially on the outside inwards, into a region within the return ring; k) applying contact portions of a contact unit (16) to the exposed winding-wire portions; 1) welding the contact portions to the winding-wire portions.

2. A method according to claim 1, **characterised in that** the winding wire (10) between two adjacent poles (4) and between two adjacent projections (9) runs radially within a circle (11) defined by the outer contours of the projections (9) and is contacted there.

3. A method according to claim 2, **characterised in that** the winding wire (10) between two adjacent poles (4) and between two adjacent projections (9) runs radially further to the inside radially by at least one wire diameter than wire feed portions (81, 82) guided around the projections (9).

4. A method according to claim 2 or 3, **characterised in that** the winding wire (10) which is guided radially inwards lies against facing side faces (12) or radial grooves (25) of two adjacent projections (9) or is only at a distance of at most one winding-wire diameter from the respective side face (12) or radial groove (25).

5. A method according to claim 2, 3 or 4, **characterised in that** that the return ring cover (8) has cutouts (21) which are open in the axial direction between the projections (9).

6. A method according to claim 5, **characterised in that** axial supporting surfaces (22) for the winding wire (10) are formed between the projections (9) and the cutouts (21).

7. A method according to claim 6, **characterised in that** axial grooves (24) are present in the supporting surfaces (22) and/or radial grooves (25) are present in the projections (9) for receiving wire portions.

8. A method according to claim 6 or 7, **characterised in that** in each case a wire feed portion (81) of the same winding wire (10) lies on a first supporting surface (22) in each case and a following wire feed portion (82) lies on a second supporting surface (23).

9. A method according to at least one of the preceding claims, **characterised in that** the contact unit (16) has at least one busbar (14) and a contact portion (20) of the winding wire (10) between two adjacent poles (4) is electrically connected to a contact projection (13) of the busbar (14).

10. A method according to claim 9, **characterised in that** the contact projection (13) is formed in a hook shape.

11. A method according to claim 5 and claim 9 or 10, **characterised in that** the contact projection (13) is arranged partially in the region of a cutout (21).

12. A method according to at least one of the preceding claims, **characterised in that** the insulating-material body (7) does not have a wire deflection means on which the winding wire (10) is guided around radially on the inside.

## Revendications

1. Procédé pour la fabrication d'un moteur à courant continu (1), avec un rotor intérieur (2) à aimants permanents, monté de manière à pouvoir tourner autour d'un axe longitudinal de moteur (19) et un noyau de stator (3) enroulé avec des pôles (4) saillants dirigés vers l'intérieur, lesquels sont d'une seule pièce avec une bague de reflux (5) dans la direction périphérique et sont séparés les uns des autres par des encoches de stator (6), un corps en matière isolante (7), lequel revêt les encoches de stator (6) et présente un élément de recouvrement de bague de reflux (8) réalisé avec des parties saillantes (9) parallèles à l'axe, lequel recouvre une face frontale axiale de la bague de reflux (5), dans lequel un fil d'enroulement (10) est enroulé autour de respectivement un pôle (4) et est guidé autour de deux parties saillantes (9) radialement à l'extérieur vers le pôle voisin dans l'espace, dans lequel une partie saillante (9) est associée à chaque pôle, **caractérisé par** les étapes de procédé suivantes : a) la fourniture d'un noyau de stator (3) pourvu d'un corps en matière isolante (7) et d'une machine d'enroulement à aiguille ; b) l'insertion du noyau de stator dans la machine d'enroulement à aiguille ; c) l'accrochage d'un fil d'enroulement à un point d'accrochage fixe sur le stator ou sur un porte-outil ; d) le guidage du fil d'enroulement (10) à partir du point d'accrochage entre deux parties saillantes (9) du corps en matière isolante (7) radialement vers l'intérieur ; e) l'enroulement d'une bobine autour d'un pôle (4) ; f) le guidage du fil d'enroulement (10) radialement vers l'extérieur entre deux parties saillantes ; g) le guidage du fil d'enroulement (10) autour d'un moyen de renvoi (33) fixé à l'outil radialement à l'extérieur de la bague de reflux, de telle sorte que le fil d'enroulement (40) est guidé autour de deux parties saillantes radialement à l'extérieur vers le pôle voisin dans l'espace ; h) la répétition des étapes d à g, jusqu'à ce que le stator soit enroulé et l'accrochage du fil d'enroulement à un point d'accrochage fixe sur le stator ou sur un porte-outil ; i) le retrait des moyens de déviation fixés à l'outil ; j) la déformation radiale des parties de fil d'enroulement s'étendant radialement à l'extérieur vers l'intérieur, jusque dans une zone à l'intérieur de la bague de reflux ; k) la pose de parties de contact d'une unité de contact (16) sur les parties de fil d'enroulement exposées ; l) le soudage des parties de contact aux parties de fil d'enroulement.

2. Procédé selon la revendication 1, **caractérisé en ce que** le fil d'enroulement (10) s'étend entre deux pôles (4) voisins et entre deux parties saillantes (9) voisines radialement à l'intérieur d'un cercle (11) défini par les contours extérieurs des parties saillantes (9) et est mis en contact à cet endroit.

3. Procédé selon la revendication 2, **caractérisé en ce que** le fil d'enroulement (10) s'étend entre deux pôles (4) voisins et entre deux parties saillantes (9) voisines radialement autour d'au moins un diamètre de fil radialement plus à l'intérieur que des parties d'amenée de fil (81, 82) guidées autour des parties saillantes (9).

4. Procédé selon la revendication 2 ou 3, **caractérisé en ce que** le fil d'enroulement (10) guidé radialement vers l'intérieur s'applique contre des surfaces latérales (12) tournées l'une vers l'autre ou des rainures radiales (25) de deux parties saillantes (9) voisines ou ne présente qu'un écart de maximum un diamètre de fil d'enroulement par rapport à la surface latérale (12) ou rainure radiale (25) respective.

5. Procédé selon la revendication 2, 3 ou 4, **caractérisé en ce que** l'élément de recouvrement de bague de reflux (8) présente entre les parties saillantes (9) des évidements (21) ouverts dans la direction axiale.

6. Procédé selon la revendication 5, **caractérisé en ce que** des surfaces d'appui (22) axiales pour le fil d'enroulement (10) sont réalisées entre les parties saillantes (9) et les évidements (21).

7. Procédé selon la revendication 6, **caractérisé en ce que** des rainures axiales (24) sont présentes dans les surfaces d'appui (22) et/ou des rainures radiales (25) dans les parties saillantes (9) pour la réception de parties de fil.

8. Procédé selon la revendication 6 ou 7, **caractérisé en ce que** respectivement une partie d'amenée de fil (81) du même fil d'enroulement (10) repose sur respectivement une première surface d'appui (22) et une partie d'évacuation de fil (82) suivante repose sur une deuxième surface d'appui (23).

9. Procédé selon au moins l'une des revendications précédentes, **caractérisé en ce que** l'unité de contact (16) présente au moins une barre omnibus (14) et une partie de contact (20) du fil d'enroulement (10) entre deux pôles (4) voisins est reliée électriquement à une partie saillante de contact (13) de la barre omnibus (14).

10. Procédé selon la revendication 9, **caractérisé en ce que** la partie saillante de contact (13) est réalisée à la façon d'un crochet.

11. Procédé selon la revendication 5 et la revendication 9 ou 10, **caractérisé en ce que** la partie saillante de contact (13) est disposée en partie dans la zone d'un évidement (21).

12. Procédé selon au moins l'une des revendications précédentes, **caractérisé en ce que** le corps en matière isolante (7) ne présente pas de moyen de déviation de fil sur lequel le fil d'enroulement (10) est guidé radialement à l'intérieur.
